# EUROPEAN PATENT SPECIFICATION

(11) **EP 2 813 538 B1**
(45) Date of publication and mention of the grant of the patent: **29.12.2021**
(21) Application number: 14171169.7
(22) Date of filing: 04.06.2014
(51) Int. Cl.: C08J 5/24, B29B 15/12

(54) **Method for making a prepreg and fiber-reinforced composite article**
Verfahren zur Herstellung eines Prepregs und Faserverstärkte Verbundartikels
Procédé de fabrication d'un prepreg et d'un article composite renforcés par des fibres

(30) Priority: 11.06.2013 US 201313914964
(43) Date of publication of application: 17.12.2014
(73) Proprietor: Johns Manville, Denver, CO 80202 (US)
(72) Inventor: Zhang, Mingfu, Highlands Ranch, Colorado 80130 (US); Asrar, Jawed, Englewood, Colorado 80111 (US); Gleich, Klaus Friedrich, Highlands Ranch, Colorado 80127 (US); Yohannes, Asheber, Littleton, Colorado 80128 (US)
(74) Representative: Dörr, Klaus

(56) References cited:
- WO-A1-01/53379
- WO-A1-2012/130732
- US-A1- 2011 045 275

## Description

### BACKGROUND

Conventional methods of making fiber-reinforced articles include placing bare fibers in a mold for the part and then flowing in the liquid precursors of a thermoset polymer. Once the precursors have infused through the fibers and filled the mold, a curing stage (sometimes called a hardening stage) commences to polymerize the thermoset into a polymer matrix that surrounds the fibers. The fiber-reinforced composite may then be released from the mold and, if necessary, shaped, sanded, or otherwise processed into the final article.

The unhardened thermoset resins used to make the composite are generally inexpensive and efficiently wet the fibers at low processing temperatures. Unfortunately however, many of the resins off gas irritating and sometimes dangerous volatile organic compounds (VOCs). The outgassing of VOCs are of particular concern during curing, when the exothermic nature of many thermoset polymerization reactions raise the temperature of the composite and drive more VOCs into the gas phase. In many instances, it is necessary to cure large thermoset articles in facilities equipped with robust ventilation and air scrubbing equipment, increasing the overall production costs.

Thermoset articles are also difficult to repair or recycle. Hardened thermoset binders often have a high degree of crosslinking, making them prone to fractures and breaks. Because thermosets normally will not soften or melt under heat, they have to be replaced instead of repaired by welding. Compounding difficulties, the unrepairable thermoset part normally cannot be recycled into new articles, but must instead be landfilled at significant cost and adverse impact on the environment. The problems are particularly acute when large thermoset parts, such as automotive panels and wind turbine blades, need to be replaced.

Because of these and other difficulties, thermoplastic resin systems are being developed for fiber-reinforced articles that were once exclusively made using thermosets. Thermoplastics typically have higher fracture toughness and chemical resistance than thermosets. They also soften and melt at raised temperatures, allowing operators to heal cracks and weld together pieces instead of having to replace a damaged part. Perhaps most significantly, discarded thermoplastic parts can be broken down and recycled into new articles, reducing landfill costs and stress on the environment.

Unfortunately, many thermoplastics also have production challenges, including high flow viscosities that cause difficulties loading and wetting the thermoplastic resin into the fibers. In some instances the melted thermoplastic is raised to high temperature, pulled into the fibers under high pressure, and if necessary under high vacuum, to increase the infiltration rate. At a minimum, these techniques increase the complexity and cost of producing the fiber-reinforced article and often result in a thermoplastic matrix that is poorly bonded to the integrated fibers. Thus, there is a need to develop new thermoplastic resin formulations and new ways to combine thermoplastic resins with reinforcing fibers. These and other issues are addressed in the present application.

### BRIEF SUMMARY

Methods of making and using prepregs in the construction of fiber-reinforced composite articles are described and defined in claims 1 to 15. The present prepregs are defined in claims 1 to 7. and include thermoplastic resin delivered to a fiber-containing substrate as a mixture of resin particles in a liquid medium. The resin particles are pre-polymerized and/or partially-polymerized compounds such as thermoplastic monomors and/or oligomers.

The fiber-containing substrate coated with the resin mixture may be treated to form the prepreg. Treatment steps may include removing the liquid medium, for example by evaporation. They may also include heating the combination of substrate and resin particles, and in some instances melting them. They may further include partiallypolymerizing a pre-polymerized resin through heat and/or catalysis.

The prepregs may be used to make thermoplastic fiber-reinforced articles such as automotive parts, airplane parts, and turbine blades, among other articles. Because the polymer resin is already present in the prepregs, less or no thermoplastic resin has to be injected into fiber-containing substrate, which mitigates a common problem thermoplastic resins have infiltrating and wetting substrate fibers.

The resin mixture may include resin particles of a cyclic alkylene terephthalate (e.g., cyclic butylene terephthalate) in an aqueous mixture. The resin particles are insoluble in water and may be dispersed in the aqueous medium, for example as a suspension. The resin mixture may also contain a polymerization catalyst, which is typically a metal salt (e.g., a tin or titanate salt).

An exemplary fiber-containing substrate is a woven fabric (e.g., woven carbon fiber, woven fiberglass, etc.). After the resin mixture of resin particles in a liquid medium is poured, dipped, sprayed, coated, etc., on the woven fabric, it may be heated to evaporate off the liquid and leave behind a coating of the resin particles. In some embodiments, the resin particles are coarse enough to remain close to the fabric surface, while in other embodiments the particles are fine enough to penetrate through the exposed surface of the fabric. In some embodiments, the amount of heat applied to the coated fabric may be enough to melt the resin particles and form a prepreg of melted resin particle as fabric. Additional embodiments include a prepreg of unmelted or partially-melted resin particles coated on the fabric.

The instant invention includes a method of making a prepreg as defined in claims 1 to 7. The method includes the step of forming a fiber-containing substrate, and contacting the fiber-containing substrate with a resin mixture which includes particles of monomers or oligomers mixed in a liquid medium, and the particles may be coated on the fiber-containing substrate to form a coated substrate as defined in claims 1 to 7. The liquid medium may be removed from the coated substrate to form the prepreg.

The instant invention further includes a method of making fiber-reinforced composite articles with the prepregs as defined in claims 8 to 15. The method includes the step of contacting a fiber-containing substrate with a resin mixture of resin particles dispersed in a liquid medium, where the resin particles comprise monomers, oligomers, as defined in claims 8 to 15. The resin particles may be dried and melted on the fiber-containing substrate to make a prepreg comprising resin and the fiber containing substrate. The prepreg may then be formed into the fiber-reinforced composite article.

The instant invention still further includes a method of forming a resin mixture which includes incorporating a cyclic alkylene terephthalate into an aqueous medium. The incorporated cyclic alkylene terephthalate is in the form of solid particles in the aqueous medium.

The instant invention still further includes a prepreg that include resin particles coated on a fiber-containing substrate, the resin particles are monomers or oligomers of a cyclic alkylene terephthalate that have been coated on the fiber-containing substrate from a resin mixture of the resin particles dispersed in a liquid medium.

Additional embodiments and features are set forth in part in the description that follows, and in part will become apparent to those skilled in the art upon examination of the specification or may be learned by the practice of the invention. The features and advantages of the invention may be realized and attained by means of the instrumentalities, combinations, and methods described in the specification.

### BRIEF DESCRIPTION OF THE DRAWINGS

A further understanding of the nature and advantages of the present invention may be realized by reference to the remaining portions of the specification and the drawings wherein like reference numerals are used throughout the several drawings to refer to similar components. In some instances, a sublabel is associated with a reference numeral and follows a hyphen to denote one of multiple similar components. When reference is made to a reference numeral without specification to an existing sublabel, it is intended to refer to all such multiple similar components.
Fig. 1 is a flowchart showing selected steps in a method of making a resin mixture according to embodiments of the invention;
Fig. 2 is a flowchart showing selected steps in a method of making a prepreg according to embodiments of the invention;
Fig. 3A shows a sheet of woven fabric and resin particles made by the present methods;
Fig. 3B shows a roll of prepreg material made by the present methods;
Fig. 4 is a flowchart showing selected steps in a method of making a fiber-reinforced article according to embodiments of the invention; and
Fig. 5 shows exemplary fiber-reinforced articles made by the present methods.

### DETAILED DESCRIPTION

Methods are described for making exemplary resin mixtures that may be used to make exemplary pre-pregs, which in turn may be used to make exemplary fiber-reinforced composites. Also described are exemplary resin mixtures, pre-pregs, and fiber-reinforced composites themselves. The resin mixtures may include a particulate phase of the resin particles dispersed in a continuous phase of a liquid medium. The pre-pregs may include combinations of the resin with a fiber-reinforced substrate, such as a woven fabric made of carbon and or glass fibers. The pre-pregs may be shaped and arranged in a template, mold, etc., and treated to form the fiber-reinforced composites. Exemplary fiber-reinforced compasses may include turbine blades for windmills, wings for aircraft, and a variety of other types of fiber-reinforced composite parts.

### Exemplary Methods of Making Resin Mixtures

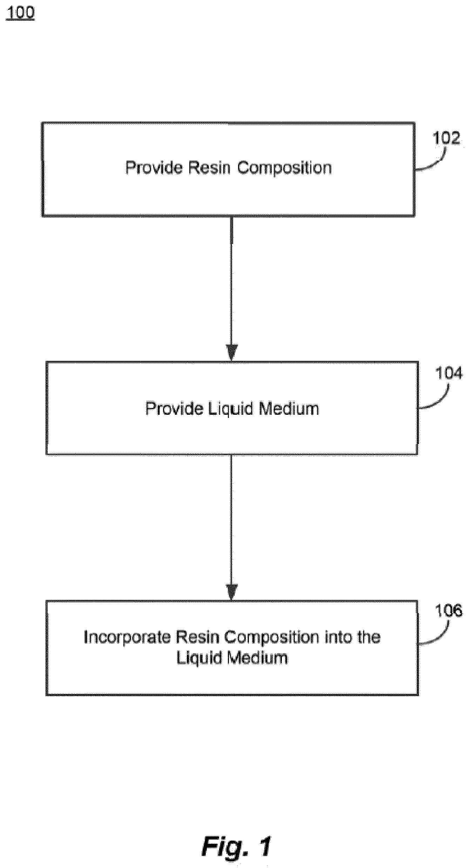

Fig. 1 shows selected steps in a method 100 of making a resin mixture that can be used to form a prepreg. The method 100 includes the step of providing the resin composition 102. The resin composition may be made of pre-polymerized monomers, partially-polymerized oligomers, or some combination of monomers and/or oligomers.

As noted above, the thermoplastic resins that is used to make the resin mixture is macrocyclic oligoesters such as cyclic alkylene terephthalates. One exemplary group of cyclic alkylene terephthalates is cyclic butylene terephthalate (CBT). An exemplary CBT, whose ring includes two butyl groups and two terephthalate groups, is illustrated below:

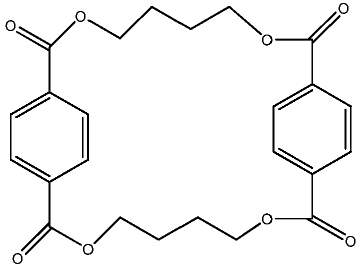

It should be appreciated that the present CBT may include additional butyl and/or terephthalate groups incorporated into the ring. It should also be appreciated that some exemplary CBT may have other moieties coupled to the CBT ring. CBT may comprise a plurality of dimers, trimers, tetramers, etc., of butylene terephthalate.

When the CBT monomers and/or oligomers are exposed to polymerization conditions such as elevated temperature (e.g., about 170°C to about 250°C) in the presence of a polymerization catalyst, the rings will open and react to create a linear polybutylene terephthalate (PBT) polymer. The polymerization reaction is reversible, and under certain conditions the PBT polymer can be converted back into cyclic monomers and oligomers of CBT. PBT polymers are sometimes referred to as the polymerized form of CBT or pCBT.

The method 100 also includes the step of providing a liquid medium 104 for the resin mixture. The liquid medium may be a room temperature liquid that can form a suspension of the resin particles without substantially dissolving the particles. For example, when the resin particles are made of water-insoluble thermoplastic monomers and/or oligomers, the liquid medium is water.

The liquid medium may include additional compounds such as polymerization catalysts, polymerization promoters, thickeners, dispersants, colorants, surfactants, flame retardants, ultraviolet stabilizers, and fillers including inorganic particles and carbon nanotubes, among other additional compounds. The polymerization catalyst may include a salt and/or acid that can be partially or fully dissolved, or dispsed, in the liquid medium. When the resin particles are monomers or oligomers of a cyclic alkylene terephthalate, the polymerization catalyst is selected to drive the polymerization of these types of macrocyclic oligoesters. Exemplary polymerization catalysts may include organometallic compounds such as organo-tin compounds and/or organo-titanate compounds. One specific polymerization catalyst for the CBT monomers and oligomers that may be butyltin chloride dihydroxide.

In the instant invention, the polymerization catalysts is incorporated onto the fibers (e.g., carbon fibers, glass fibers, etc.) in the fiber-containing substrate. For example, glass or carbon fibers may be treated with a polymerization catalyst composition (e.g., a sizing composition) that coats the fibers with the polymerization catalyst. When the resin material makes contact with the treated fibers at the polymerization temperature, the polymerization catalyst on the fibers facilitate the polymerization of the resin into a polymerized resin matrix. In some instances, application of the polymerization catalyst on the fibers of the fiber-containing substrate eliminate the need to incorporate the polymerization catalyst into the resin or the liquid medium of the resin mixture. This may be advantageous when the polymerization catalyst is not easily dissolved and/or dispersed in either the polymer resin or liquid medium. For example, the sizing/coating composition of the polymer catalyst may use a different solvent than the liquid medium, a solvent that would otherwise be undesirable to include in the resin mixture.

The polymerization catalyst may also be optionally accompanied by a polymerization promoter that accelerates the polymerization rate of the monomers and/or oligomers. When the resin particles include CBT, the polymerization promoter may by an alcohol and/or epoxide compound. Exemplary alcohols may include one or more hydroxyl groups, such as mono-alcohols (e.g., butanol), diols (e.g., ethylene glycol, 2-ethyl-1,3-hexanediol, bis(4-hydroxybutyl)terephthalate), triols, and other polyols. Exemplary epoxides may include one or more epoxide groups such as monoepoxide, diepoxide, and higher epoxides, such as bisphenol A diglycidylether. They may also include polyol and polyepoxides, such as poly(ethylene glycol).

The method 100 also includes incorporating the resin composition into the liquid medium 106 to form the resin mixture. When the resin composition is a thermoplastic monomer or oligomer, it may be incorporated into the liquid medium as a liquid, a solid, or both. Introducing the resin composition as a liquid may include heating the resin to its melting temperature and pouring or injecting the melted resin into the liquid medium to form an emulsion. In many instances, melted resin is cooled on contact with the liquid medium, causing the resin to solidify.

In case of CBTs, the resins are typically solids at room temperature (e.g., about 20°C), and begin to melt at around 120°C. At around 160°C, CBTs are generally fully melted with a liquid viscosity of about 0.15 Pa*s (150 centipoise (cP)). As the molten CBTs are heated further, the viscosity may continue to drop, and in some instances may reach about 0.03 Pa*s (30 cP) at about 190°C. However, the viscosity can start to climb as the CBT starts polymerizing to PBT. Temperature ranges for CBT polymerization are generally about 170°C to about 250°C, with higher temperatures rapidly increasing the polymerization rate. The melting point of the polymerized PBT is typically around 225°C.

The CBT may be melted around 120-160°C and introduced to an aqueous medium where the melted CBT rapidly cools and solidifies into a dispersion of CBT resin particles. In some instances a polymerization catalyst for the CBT may be added to the resin mixture after the resin particles form to minimize the extent CBT polymerization. However, because the CBT emulsion cools quickly in the aqueous medium a polymerization catalyst may be mixed with the water even before the emulsion is formed. In still other instances, a polymerization catalyst may be present in the melted CBT resin before forming the emulsion with the aqueous medium.

Additional techniques for incorporating the resin composition into the liquid medium include dispersing solid particles of the resin composition into the liquid medium. When the resin composition is a solid at room temperature, it may be ground, milled, or otherwise formed into dispersible particles that are added to the liquid medium. For example, commercial sources of CBT resin (such as CBT^{®} made by Cyclics Corporation of Schenectady NY) are commonly sold as pellets that can be ground into fine particles with average particle diameters of about 1 µm to about 50 µm. The CBT particles may then be dispersed into an aqueous medium to form the resin mixture.

The present methods of making the resin mixture may also include adding additional pre and post polymerized thermoplastics to the mixture. For example, an aqueous resin mixture of CBT particles described above may also include particles of PBT, as well as monomers, oligomers, and/or polymers of other thermoplastic resins, such as polyesters, polyalkylenes, polyamides, etc.

The resin mixtures may be used to form prepregs that are the starting materials of fiber-reinforced composites. The present prepregs are fiber-containing materials that have been pre-impregnated with thermoplastic monomers, oligomers, and/or polymers that contribute to the formation of the resin matrix in a fiber-reinforced composite made with the prepregs. In some examples the resin materials in the prepreg may be partially cured to produce a "B-stage" prepreg that has undergone some polymerization of the resin material, but requires additional curing to be fully polymerized. In other examples, the prepreg may be made from uncured (a.k.a., "A-stage") thermoplastic monomers and/or oligomers, or fully-cured (a.k.a., "C-stage") thermoplastic polymers.

### Exemplary Methods of Making Prepregs

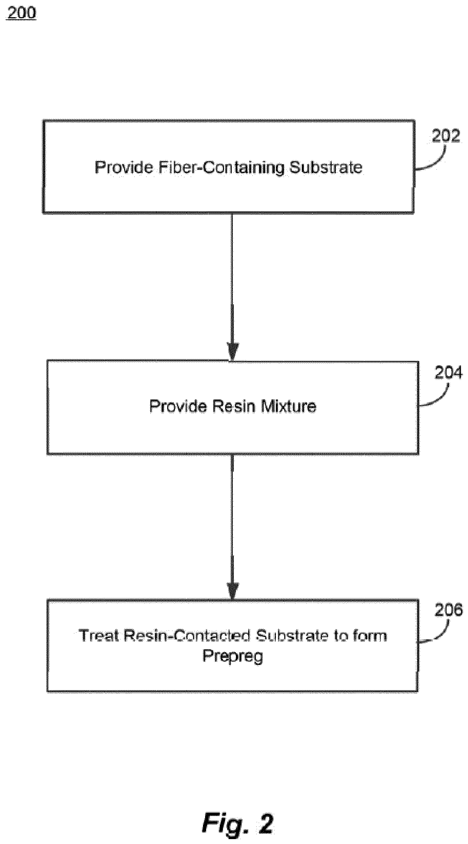

Fig. 2 is a flowchart showing selected steps in a method 200 of making a such a prepreg. The method 200 may include the step of providing a fiber-containing substrate 202 that used to make the prepreg. Exemplary fiber-containing substrates may include woven fabrics, multiaxial fabrics, stitched fabrics, and non-woven fabrics, among others. The fabrics may be made out of one or more types of fibers, such as glass fibers, basalt fibers, carbon fibers, polymer fibers (e.g., aramide fibers), and natural fibers (e.g., cellulose fibers), among other types of fibers. For example, individual carbon filaments may form a tow, which is woven into a fabric that acts as the fiber-containing substrate 202.

The method 200 also includes providing a resin mixture 204. The resin mixture may be made according to the method 100 described above, and may include a combination of resin particles dispersed in a liquid medium.

The fiber-containing substrate may be contacted with the resin mixture and the resin-contacted substrate may be treated to form the prepreg 206. Techniques for contacting the fiber-containing substrate with the resin may include applying the resin mixture to the substrate by spraying, curtain coating, spin coating, blade coating, dip coating, and/or roll coating, among other techniques. The resin-coated substrate may then be treated to remove some or all of the liquid medium from the resin mixture and/or melt and partially cure the resin particles in the mixture.

The treatment step 206 may include heating the resin-contacted substrate under conditions conducive to evaporating the liquid medium and leaving a coating of the resin particles on the fiber substrate. In some examples, the heating temperature is set high enough to both evaporate the liquid medium and melt the resin particles. For example, if the resin mixture is an aqueous mixture of CBT particles, the heating temperature may be set somewhere in the range of about 120-200°C, which is high enough to both evaporate off substantially all the liquid water and melt the CBT particles on the substrate to form a prepreg of CBT resin coating the substrate. In further examples, the heating temperature may be set high enough to start polymerizing the resin to a B-stage where the prepreg is partially cured. The treatment step 206 may also include techniques used in addition to or in lieu of heating to partially polymerize the resin, such as exposure to ultraviolet light.

The method 200 may also include optional steps (not shown) of introducing additional compounds to the substrate and/or resin mixture. For example, while many resin mixtures may be one-part systems that include a polymerization catalyst in the mixture, it may be advantageous in some instances to keep the pre-polymerized resin separated from the polymerization catalyst until contacting the fiber-containing substrate. Thus, separate streams of the resin mixture and catalyst mixture or solution may be independently introduced to the substrate. It may also be desirable to introduce dry resin particles directly on the substrate before and/or after the substrate is contacted by the resin mixture. These dry resin particles may be the same or different from the resin particles in the resin mixture. For example, dry resin particles of polyethylene or polyester may be sprinkled onto the substrate before, during or after a resin mixture of CBT particles contact the substrate.

### Exemplary Prepregs

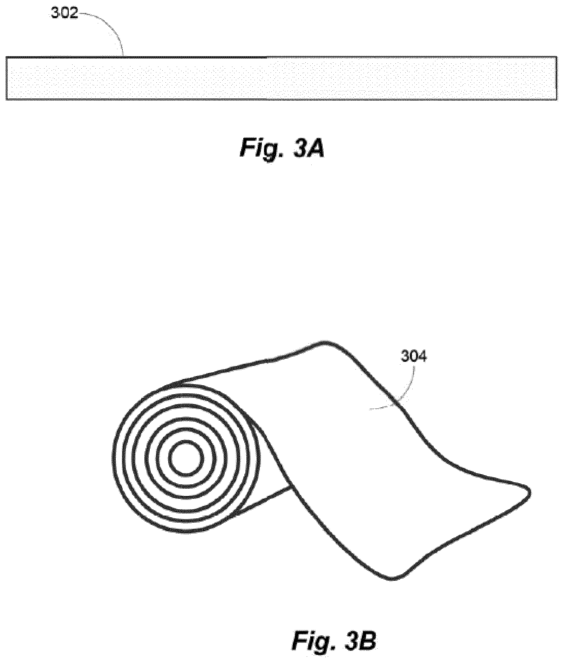

Figs. 3A-B show some exemplary prepregs made using the present methods. Fig. 3A shows a sheet 302 of woven fabric (e.g., woven carbon fibers, woven glass fibers, etc.) and resin particles. The sheet 302 may be heated to the melting temperature of the resin particles, permitting them to wet the fibers of the woven fabric and produce a prepreg sheet having a continuous resin phase.

Fig. 3B shows a roll 304 of prepreg material that may be used as sheet molding compound (SMC), among other applications. In some embodiments, the prepreg material may be sandwiched between film layers that prevent contamination of the prepreg as well as the bonding of adjacent layers on the roll. The film layers are selected to easily peel away from the prepreg when it is ready to be used in making fiber-reinforced articles. Alternatively, the film layers may be compatible with the pre-preg, and incorporated in the composite part after molding.

In some examples (not shown), the pre-pregs may be stacked into a plurality of adjacent layers. Embodiments may include a stacked plurality of pre-preg layers bonded to each other by the application of adhesive between adjacent layers. In additional embodiments, the stacked layer of pre-pregs may be bonded by the resin present in each of the individual pre-preg layers without the aid of adhesives.

### Exemplary Methods of Making Fiber-Reinforced Composite Articles

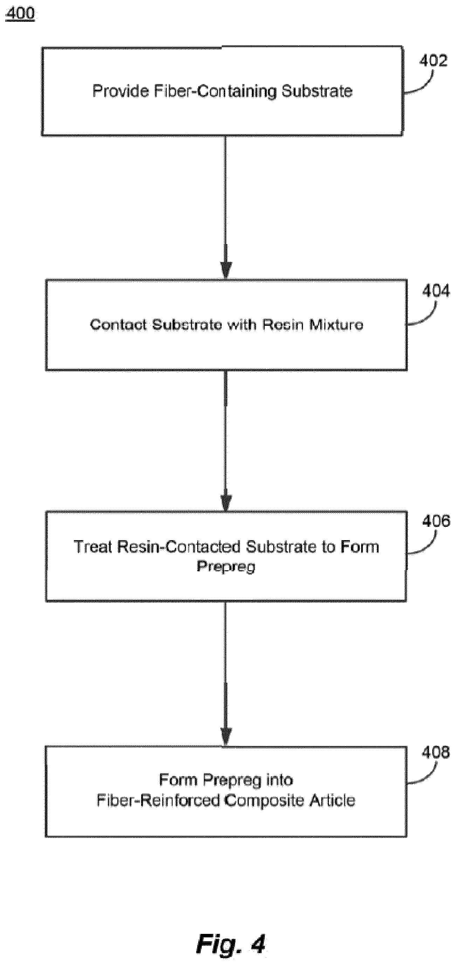

The prepregs may be used in methods of making a fiber-reinforced article like the method 400 illustrated in Fig. 4. The method 400 includes the steps of providing a fiber-containing substrate 402. As noted above, exemplary fiber-containing substrates may include woven fabrics, multiaxial fabrics, stitched fabrics, and non-woven fabrics, among others. The substrate may be contacted with a resin mixture 404 that delivers resin particles to the substrate. The resin-contacted substrate may then be treated to form the prepreg 406.

**-The** resulting prepreg may be formed into a fiber-reinforced composite article 408 through a variety of techniques. For example a single layer or multiple layers of the prepreg may be compression molded into the fiber-reinforced article. When the prepreg includes pre-polymerized and/or partially-polymerized resin, the compression molding process may include a heating step (e.g., hot pressing) to fully polymerize the resin. Heat may also be used in the compression molding of fully-polymerized prepregs to melt and mold the prepreg into the shape of the final article.

-The prepregs may also be used to in conjunction with other fibers and resin materials to make the final composite article. For example, the prepreg may be placed in selected sections of a tool or mold to reinforce the article and/or provide material in places that are difficult to reach for thermoset and/or thermoplastic resins. For example, the prepregs may be applied to sharp corners and other highly structured areas of a mold or layup used in reactive injection molding processes (RIM), structural reactive injective molding processes (SRIM), resin transfer molding processes (RTM), vacuum-assisted resin transfer molding processes (VTRM), spray-up forming processes, filament winding processes, long-fiber injection molding processes, and pultrusion, among others.

Prepregs are made from pre-polymerized or partially-polymerized CBT monomers and/or oligomers can be converted to a fully-polymerized fiber-reinforced article under isothermal processing conditions. As noted above, the CBT monomers and oligomers have melting points that start as low as 120°C and significant polymerization rates starting at about 170°C. Because polymerized PBT has a higher melting point of around 225°C, the CBT can be melted and polymerized into a solid PBT matrix at the same temperature without a cooling stage prior to demolding. The isothermal processing of the prepreg (e.g., processing at a temperature between about 170°C and 200°C) can significantly speed production of the fiber-reinforced article, especially for larger volume articles that normally require longer cooling periods for the melted thermoplastic.

### Exemplary Fiber-Reinforced Composite Articles

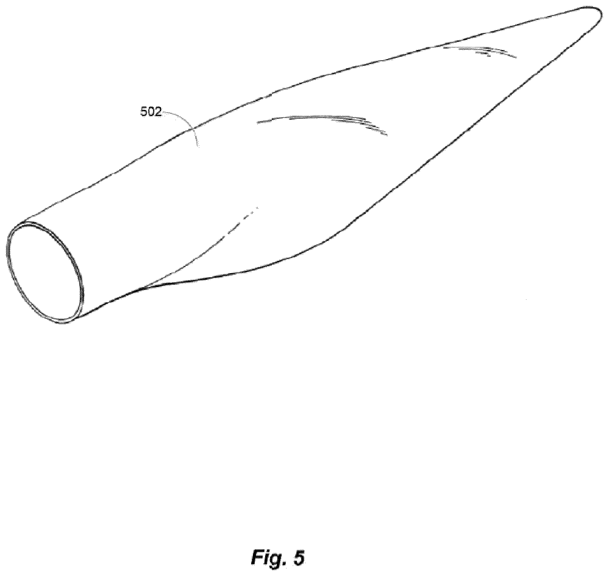

Fig. 5 shows an exemplary fiber-reinforced composite wind turbine blade 502 formed by the present prepregs. The blade 502 is one of many types of articles that can be formed by the present prepregs. Other articles may include vehicle parts (e.g., aircraft parts, automotive parts, etc.), appliance parts, containers, etc.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the electrode" includes reference to one or more electrodes and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A method of making a pre-polymerized prepreg, the method comprising:
(i) forming a fiber-containing substrate;
(ii) contacting the fiber-containing substrate with a resin mixture; and
(iii) removing the liquid medium from the coated substrate to form the pre-polymerized prepreg,
wherein the resin mixture in step (ii) includes particles of monomers or oligomers mixed in a liquid medium comprising water and the particles of the monomers or oligomers are coated on the fiber-containing substrate to form a coated substrate and the fiber-containing substrate further comprises a polymerization catalyst for the monomer or oligomer on the fibers and the pre-polymerized monomers or oligomers comprise a cyclic alkylene terephthalate.

2. The method of claim 1, wherein the contacting of the fiber-containing substrate with the resin mixture comprises spraying, curtain coating, spin coating, blade coating, dip coating, or roll coating the resin mixture on the fiber-containing substrate.

3. The method of claim 1, wherein the pre-polymerized monomers or oligomers comprise a cyclic alkylene terephthalate which comprises cyclic butylene terephthalate.

4. The method of claim 1, wherein the resin mixture further comprises a polymerization catalyst for the monomer or oligomer, and wherein at least a portion of the polymerization catalyst remains on the fiber-containing substrate following the removal of the liquid medium from the fiber-containing substrate.

5. The method of claim 1, wherein the polymerization catalyst comprises an organo-tin or organo-titanate compound.

6. The method of claim 1, wherein the resin mixture further comprises a polymerization promoter for the monomer or oligomer, preferably the polymerization promoter comprises an alcohol or an epoxide, and wherein at least a portion of the polymerization promoter remains on the fiber-containing substrate following the removal of the liquid medium from the fiber-containing substrate.

7. The method of claim 1, wherein the removing of the liquid medium from the fiber-containing substrate comprises evaporating the liquid medium from the fiber-containing substrate.

8. A method of making a fiber-reinforced composite article, the method comprising:
(i) contacting a fiber-containing substrate with a resin mixture of resin particles dispersed in a liquid medium comprising water, wherein the resin particles comprise monomers, oligomers of a cyclic alkylene terephthalate or polymers thereof, the fiber-containing substrate comprises a polymerization catalyst for the monomers or oligomers on the fibers;
(ii) drying and melting the resin particles on the fiber-containing substrate to make a prepreg comprising resin and the fiber-containing substrate; and
(iii) forming the prepreg into the fiber-reinforced composite article.

9. The method of claim 8, wherein (a) the resin particles comprise monomers or oligomers and the prepreg is a pre-polymerized prepreg and the forming of the pre-polymerized prepreg into the fiber-reinforced composite article comprises polymerizing the resin or (b) the resin particles comprise polymers and the prepreg is a polymerized prepreg and the forming of the polymerized prepreg into the fiber-reinforced composite article comprises melting the resin.

10. The method of claim 8, wherein the fiber-containing substrate comprises woven fabrics, multiaxial fabrics, stitched fabrics, or nonwoven fabrics, preferably the fiber-containing substrate comprises glass fibers, basalt fibers, carbon fibers, polymer fibers, most preferred the polymer fibers comprise aramide fibers, or natural fibers, most preferred the natural fibers comprise cellulose fibers.

11. The method of claim 8, wherein the resin mixture:
(i) is made by forming an emulsion or by dispersing the particles of the monomers, oligomers or polymers in the liquid medium and/or
(ii) further comprises a polymerization catalyst for the monomers or oligomers, preferably the polymerization catalyst comprises an organometallic compound, most preferred the organometallic compound comprises an organo-tin compound or an organo-titanate compound, in particular the organo-tin compound comprises butyltin chloride dihydroxide.

12. The method of claim 8, wherein the resin mixture further comprises a polymerization promoter for the monomers or oligomers, preferably the polymerization promoter comprises an alcohol or an epoxide.

13. The method of claim 8, wherein
(i) the monomers or oligomers comprise
(a) precursors to a thermoplastic polymer and/or
(b) a cyclic alkylene terephthalate, preferably the cyclic alkylene terephthalate comprises cyclic butylene terephthalate and
(ii) the polymers comprise thermoplastic polymers, preferably the polymers comprise polyalkylene terephthalate.

14. The method of claim 8, wherein the prepreg comprises the resin of the monomers or oligomers coated on the fiber-containing substrate, and further comprises a polymerization catalyst for the monomers or oligomers.

15. The method of claim 8, wherein the step of forming the prepreg into the fiber-reinforced composite article comprises:
(i) stacking the prepreg to form at least a part of the fiber-reinforced composite article or
(ii) incorporating the prepreg into a mold that defines a shape for the fiber-reinforced composite article or
(iii) comprises heating and pressurizing the prepreg inside a mold, wherein the heating is conducted at a heating temperature that melts and polymerizes the resin of the prepreg.

## Patentansprüche

1. Verfahren zur Herstellung eines vorpolymerisierten Prepregs, wobei das Verfahren umfasst:
(i) Bilden eines faserhaltigen Substrats;
(ii) Inkontaktbringen des faserhaltigen Substrats mit einer Harzmischung; und
(iii) Entfernen des flüssigen Mediums aus dem beschichteten Substrat, um das vorpolymerisierte Prepreg zu bilden,
wobei die Harzmischung in Schritt (ii) Partikel von Monomeren oder Oligomeren umfasst, die in einem Wasser umfassenden, flüssigen Medium gemischt sind, und die Partikel der Monomere oder Oligomere auf das faserhaltige Substrat aufgetragen werden, um ein beschichtetes Substrat zu bilden, und das faserhaltige Substrat ferner einen Polymerisationskatalysator für das Monomer oder Oligomer auf den Fasern umfasst, und die vorpolymerisierten Monomere oder Oligomere ein cyclisches Alkylenterephthalat umfassen.

2. Verfahren nach Anspruch 1, wobei das Inkontaktbringen des faserhaltigen Substrats mit der Harzmischung Sprühen, Vorhangstreichen, Rotationsbeschichten, Rakelstreichen, Tauchbeschichten oder Walzenstreichen der Harzmischung auf das faserhaltige Substrat umfasst.

3. Verfahren nach Anspruch 1, wobei die vorpolymerisierten Monomere oder Oligomere ein cyclisches Alkylenterephthalat umfassen, das cyclisches Butylenterephthalat umfasst.

4. Verfahren nach Anspruch 1, wobei die Harzmischung ferner einen Polymerisationskatalysator für das Monomer oder Oligomer umfasst und wobei mindestens ein Teil des Polymerisationskatalysators nach der Entfernung des flüssigen Mediums aus dem faserhaltigen Substrat auf dem faserhaltigen Substrat verbleibt.

5. Verfahren nach Anspruch 1, wobei der Polymerisationskatalysator eine Organozinn- oder Organotitanatverbindung umfasst.

6. Verfahren nach Anspruch 1, wobei die Harzmischung ferner einen Polymerisationsbeschleuniger für das Monomer oder Oligomer umfasst, wobei der Polymerisationsbeschleuniger vorzugsweise einen Alkohol oder ein Epoxid umfasst und wobei mindestens ein Teil des Polymerisationsbeschleunigers nach der Entfernung des flüssigen Mediums aus dem faserhaltigen Substrat auf dem faserhaltigen Substrat verbleibt.

7. Verfahren nach Anspruch 1, wobei das Entfernen des flüssigen Mediums aus dem faserhaltigen Substrat das Verdampfen des flüssigen Mediums aus dem faserhaltigen Substrat umfasst.

8. Verfahren zum Herstellen eines faserverstärkten Verbundgegenstands, wobei das Verfahren umfasst:
(i) Inkontaktbringen eines faserhaltigen Substrats mit einer Harzmischung aus Harzpartikeln, die in einem Wasser umfassenden, flüssigen Medium dispergiert sind, wobei die Harzpartikel Monomere, Oligomere eines cyclischen Alkylenterephthalats oder Polymere davon umfassen, wobei das faserhaltige Substrat einen Polymerisationskatalysator für die Monomere oder Oligomere auf den Fasern umfasst;
(ii) Trocknen und Schmelzen der Harzpartikel auf dem faserhaltigen Substrat, um ein Prepreg umfassend Harz und das faserhaltige Substrat herzustellen; und
(iii) Formen des Prepregs zu dem faserverstärkten Verbundgegensatz.

9. Verfahren nach Anspruch 8, wobei (a) die Harzpartikel Monomere oder Oligomere umfassen und es sich bei dem Prepreg um ein vorpolymerisiertes Prepreg handelt und das Formen des vorpolymerisierten Prepregs zu dem faserverstärkten Verbundgegenstand das Polymerisieren des Harzes umfasst oder (b) die Harzpartikel Polymere umfassen und es sich bei dem Prepreg um ein vorpolymerisiertes Prepreg handelt und das Formen des polymerisierten Prepregs zu dem faserverstärkten Verbundgegenstand das Schmelzen des Harzes umfasst.

10. Verfahren nach Anspruch 8, wobei das faserhaltige Substrat Gewebe, multiaxiale Stoffe, Gewirke oder Vliese umfasst, wobei das faserhaltige Substrat vorzugsweise Glasfasern, Basaltfasern, Karbonfasern, Polymerfasern umfasst, wobei die Polymerfasern am meisten bevorzugt Aramidfasern oder Naturfasern umfassen, wobei die Naturfasern am meisten bevorzugt Zellulosefasern umfassen.

11. Verfahren nach Anspruch 8, wobei die Harzmischung:
(i) durch Bilden einer Emulsion oder durch Dispergieren der Partikel der Monomere, Oligomere oder Polymere in dem flüssigen Medium hergestellt wird und/oder
(ii) ferner einen Polymerisationskatalysator für die Monomere oder Oligomere umfasst, wobei der Polymerisationskatalysator vorzugsweise eine metallorganische Verbindung umfasst, wobei die metallorganische Verbindung am meisten bevorzugt eine Organozinnverbindung oder eine Organotitanatverbindung umfassen, wobei die Organozinnverbindung insbesondere Butylzinnchloriddihydroxid umfasst.

12. Verfahren nach Anspruch 8, wobei die Harzmischung ferner einen Polymerisationsbeschleuniger für die Monomere oder Oligomere umfasst, wobei der Polymerisationsbeschleuniger vorzugsweise einen Alkohol oder ein Epoxid umfasst.

13. Verfahren nach Anspruch 8, wobei
(i) die Monomere oder Oligomere
(a) Vorstufen eines thermoplastischen Polymers umfassen und/oder
(b) ein cyclisches Alkylenterephthalat umfassen, wobei das cyclische Alkylenterephthalat vorzugsweise cyclisches Butylenterephthalat umfasst, und
(ii) die Polymere thermoplastische Polymere umfassen, wobei die Polymere vorzugsweise Polyalkylenterephthalat umfassen.

14. Verfahren nach Anspruch 8, wobei das Prepreg das Harz der Monomere oder Oligomere umfasst, das auf das faserhaltige Substrat aufgetragen ist, und ferner einen Polymerisationskatalysator für die Monomere oder Oligomere umfasst.

15. Verfahren nach Anspruch 8, wobei der Schritt des Formens des Prepregs zu dem faserverstärkten Verbundgegenstand umfasst:
(i) Stapeln des Prepregs, um mindestens einen Teil des faserverstärkten Verbundgegenstands zu bilden, oder
(ii) Einbringen des Prepregs in eine Form, die eine Form für den faserverstärkten Verbundgegenstand definiert, oder
(iii) Erwärmen und Unterdrucksetzen des Prepregs innerhalb einer Form, wobei das Erwärmen bei einer Erwärmungstemperatur durchgeführt wird, die das Harz des Prepregs schmilzt und polymerisiert.

## Revendications

1. Procédé de fabrication d'un prepreg pré-polymérisé, le procédé comprenant:
(i) former un substrat contenant des fibres;
(ii) mettre en contact le substrat contenant des fibres avec un mélange de résine; et
(iii) éloigner le milieu liquide du substrat revêtu pour former le prepreg pré-polymérisé,
où le mélange de résine dans l'étape (ii) comprend les particules de monomères ou d'oligomères mélangées dans un milieu liquide comprenant de l'eau et les particules des monomères ou des oligomères sont revêtues sur le substrat contenant des fibres pour former un substrat revêtu et le substrat contenant des fibres comprend en outre un catalyseur de polymérisation pour le monomère ou l'oligomère sur les fibres et les monomères ou oligomères pré-polymérisés comprennent un téréphtalate d'alkylène cyclique.

2. Procédé selon la revendication 1, où le contact du substrat contenant des fibres avec le mélange de résine comprend la pulvérisation, le revêtement de rideau, le revêtement par centrifugation, le revêtement à lame, le revêtement par immersion, ou le revêtement à rouleau du mélange de résine sur le substrat contenant des fibres.

3. Procédé selon la revendication 1, où les monomères ou les oligomères pré-polymérisés comprennent un téréphtalate d'alkylène cyclique qui comprend le téréphtalate de butylène cyclique.

4. Procédé selon la revendication 1, où le mélange de résine comprend en outre un catalyseur de polymérisation pour le monomère ou oligomère, et où au moins une portion du catalyseur de polymérisation reste sur le substrat contenant des fibres après l'éloignement du milieu liquide du substrat contenant des fibres.

5. Procédé selon la revendication 1, où le catalyseur de polymérisation comprend un composé d'organo-étain ou d'organo-titanate.

6. Procédé selon la revendication 1, où le mélange de résine comprend en outre un promoteur de polymérisation pour le monomère ou oligomère, préférablement le promoteur de polymérisation comprend un alcool ou un époxyde, et où au moins une portion du promoteur de polymérisation reste sur le substrat contenant des fibres après l'éloignement du milieu liquide du substrat contenant des fibres.

7. Procédé selon la revendication 1, où l'éloignement du milieu liquide du substrat contenant des fibres comprend l'évaporation du milieu liquide du substrat contenant des fibres.

8. Procédé de fabrication un article composite renforcé par des fibres, le procédé comprenant:
(i) mettre en contact un substrat contenant des fibres avec un mélange de résine de particules de résine dispersées dans un milieu liquide comprenant de l'eau, où les particules de résine comprennent les monomères, les oligomères d'un téréphtalate d'alkylène cyclique ou les polymères de celui, le substrat contenant des fibres comprend un catalyseur de polymérisation pour les monomères ou les oligomères sur les fibres;
(ii) sécher et fondre les particules de résine sur le substrat contenant des fibres pour fabriquer un prepreg comprenant de la résine et le substrat contenant des fibres; et
(iii) former le prepreg dans l'article composite renforcé par des fibres.

9. Procédé selon la revendication 8, où (a) les particules de résine comprennent les monomères ou les oligomères et le prepreg est un prepreg pré-polymérisé et la formation du prepreg pré-polymérisé dans l'article composite renforcé par des fibres comprend la polymérisation de résine ou (b) les particules de résine comprennent les polymères et le prepreg est un prepreg polymérisé et la formation du prepreg polymérisé dans l'article composite renforcé par des fibres comprend la fusion de la résine.

10. Procédé selon la revendication 8, où le substrat contenant des fibres comprend les tissus tissés, les tissus multiaxiaux, les tissus cousus, ou les non tissés, préférablement le substrat contenant des fibres comprend les fibres de verre, les fibres de basalte, les fibres de carbone, les fibres polymère, plus préférées les fibres polymère comprennent les fibres d'aramide, ou les fibres naturelles, plus préférées les fibres naturelles comprennent les fibres de cellulose.

11. Procédé selon la revendication 8, où le mélange de résine:
(i) est produit par la formation d'une émulsion ou par la dispersion des particules de monomères, oligomères ou polymères dans le milieu liquide et/ou
(ii) comprend en outre un catalyseur de polymérisation pour les monomères ou les oligomères, préférablement le catalyseur de polymérisation comprend un composé organo-métallique, plus préféré le composé organo-métallique comprend un composé d'organo-étain ou d'organo-titanate, en particulier le composé d'organo-étain comprend du dihydroxyde de chlorure de butylétain.

12. Procédé selon la revendication 8, où le mélange de résine comprend en outre un promoteur de polymérisation pour les monomère ou oligomères, préférablement le promoteur de polymérisation comprend un alcool ou un époxyde.

13. Procédé selon la revendication 8, où
(i) les monomères ou les oligomères comprennent
(a) les précurseurs d'un polymère thermoplastique et/ou
(b) un téréphtalate d'alkylène cyclique, préférablement le téréphtalate d'alkylène cyclique comprend le téréphtalate de butylène cyclique et
(ii) les polymères comprennent les polymères thermoplastiques, préférablement les polymères comprennent le téréphtalate de polyalkylène.

14. Procédé selon la revendication 8, où le prepreg comprend la résine des monomères ou oligomères revêtue sur le substrat contenant des fibres, et comprend en outre un catalyseur de polymérisation pour les monomères ou oligomères.

15. Procédé selon la revendication 8, où l'étape de former le prepreg dans l'article composite renforcé par des fibres comprend:
(i) empiler le prepreg pour former au moins une partie de l'article composite renforcé par des fibres ou
(ii) incorporer le prepreg dans une moule qui définit une forme pour l'article composite renforcé par des fibres ou
(iii) réchauffer et pressuriser le prepreg à l'intérieur d'une moule, où le chauffage est réalisé à une température de chauffage qui fond et polymérise la résine du prepreg.
